# EUROPEAN PATENT SPECIFICATION

(11) **EP 2 766 984 B1**
(45) Date of publication and mention of the grant of the patent: **31.10.2018**
(21) Application number: 12787481.6
(22) Date of filing: 05.10.2012
(51) Int. Cl.: H02P 1/02, H02P 1/46

(54) **METHOD OF STARTING A BRUSHLESS MOTOR**
VERFAHREN ZUM STARTEN EINES BÜRSTENLOSEN MOTORS
PROCÉDÉ DE DÉMARRAGE D'UN MOTEUR SANS BALAI

(30) Priority: 14.10.2011 GB 201117772
(43) Date of publication of application: 20.08.2014
(73) Proprietor: Dyson Technology Limited, Malmesbury, Wiltshire SN16 0RP (GB)
(72) Inventor: CHEN, Yu, Malmesbury Wiltshire SN16 0RP (GB)
(74) Representative: Lobban, Colin
(86) International application number: PCT/GB2012/052472
(87) International publication number: WO 2013/054094

(56) References cited:
- EP-A1- 2 028 747
- US-A1- 2010 253 264

## Description

The present invention relates to a method of starting a brushless motor.

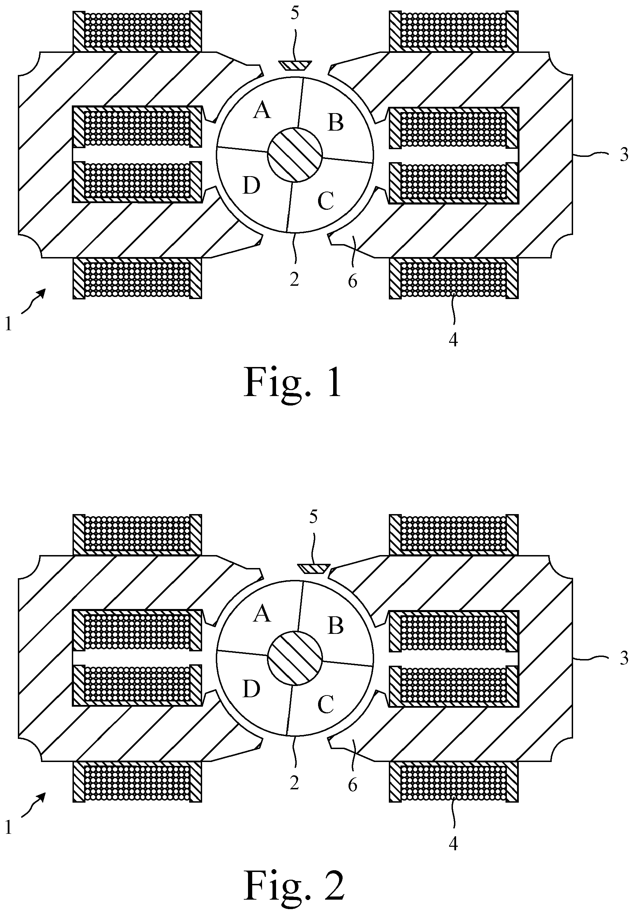

Figure 1 illustrates a brushless motor 1 comprising a permanent-magnet rotor 2, a stator 3 having a phase winding 4, and a Hall-effect sensor 5. The rotor 2 has four magnetic poles, labelled A to D, and the stator 3 has four salient poles 6 arranged about the rotor 2. The motor 1 is unidirectional and is intended to be driven in a forward direction only.

Conventional methods of starting the motor 1 typically proceed as follows. When the rotor 2 is in the parked position of Figure 1, the Hall-effect sensor 5 is assumed to sense the polarity of rotor pole A. On the basis of the signal output by the Hall-effect sensor 5, the correct polarity of phase current is applied to the winding 4 so that the rotor 2 is driven forwards. Unfortunately, when the rotor 2 is in the parked position, the angular position of the Hall-effect sensor 5 is relatively close to a transition in the polarity of the rotor 2. Accordingly, any variance in the position of the Hall-effect sensor 5 may mean that the motor 1 fails to start. For example, Figure 2 illustrates the same brushless motor 1 but with the position of the Hall-effect senor 5 shifted slightly to the right. As a result, the Hall-effect sensor 5 no longer senses rotor pole A but instead senses rotor pole B, which has the opposite polarity. Consequently, the initial phase current will have the wrong polarity and thus the rotor 2 will be driven backwards rather than forwards.

Conventional methods of starting the motor 1 therefore suffer from the problem that relatively tight tolerances are required on the position of the Hall-effect sensor 5.

US2010253264 discloses a brushless DC motor comprising a rotor, a stator, a rotor position sensor and a stator winding connected in the diagonal of an H-bridge to provide an exciting current to the stator winding

The present invention provides a method of starting a brushless motor, the motor comprising a rotor, a stator having at least one phase winding, and a rotor-position sensor, the method comprising: exciting the winding; sensing a signal output by the sensor; if an edge of the signal is sensed during a first period: commutating the winding in response to the edge; otherwise: commutating the winding at the end of the first period; sensing the signal; and commutating the winding in response to a second of two edges of the signal sensed during a second period.

Exciting the winding causes the rotor to rotate in either a forward or backward direction. The signal output by the rotor-position sensor is sensed during excitation. If an edge of the signal is sensed within the first period then the rotor is assumed to be rotating in a forward direction. Accordingly, in response to the edge, the winding is commutated in order to continue driving the rotor forward. If, on the other hand, no edge of the signal is sensed within the first period, the rotor is assumed to have rotated in a backward direction. In this instance, the winding is commutated at the end of the first period so as to drive the rotor forwards. The signal output by the rotor-position sensor is again sensed and the winding is commutated in response to the second of two edges of the signal so as to continue driving the rotor forwards. As a result, the rotor is driven forwards irrespective of any tolerance in the position of the sensor. Indeed, the rotor may be driven forwards without the need to sense the signal of the sensor when the rotor is in a parked position.

The initial excitation causes the rotor to rotate in either a forward or backward direction, i.e. the torque generated by the excitation is either positive or negative. The first period may end at a time sufficient for the rotor to rotate from stationary through an angle of at least 360/N mechanical degrees when the initial excitation generates positive excitation torque, where N is the number of rotor poles. Consequently, when each edge of the signal corresponds to a transition between rotor poles, an edge of the signal should be sensed during the first period if the rotor is rotating forwards, irrespective of any tolerance in the position of the sensor.

The second period may end at a time sufficient for the rotor to rotate from stationary through an angle greater than 360/N mechanical degrees after commutating the winding, where N is the number of rotor poles. Consequently, when each edge of the signal corresponds to a transition between rotor poles, two edges of the signal may be sensed during the second period if the rotor is rotating forwards. If the second period ended earlier than this then it is possible that two edges of the signal would not be sensed even when the rotor is rotating forwards.

The first period may begin a fixed period of time after the start of excitation. Similarly, the second period may begin a fixed period of time after commutation. The signal output by the sensor is therefore effectively ignored for a fixed period of time after the start of excitation or commutation. Any spurious edges in the signal that arise at the start of excitation or commutation are therefore ignored. For example, where the rotor-position sensor is a Hall-effect sensor, the stator field may influence the signal output by the sensor. However, the stator field is only likely to affect the output of the Hall-effect sensor when the rotor field passing though the Hall-effect sensor is relative weak, e.g. at a transition between rotor poles. Shortly after exciting or commutating the winding, the rotor will rotate to a position in which the rotor field passing through the Hall-effect sensor is much stronger and exceeds that of the stator field. Consequently, any adverse effects that the stator field might have on the output of the Hall-effect sensor are likely to be short-lived and can be averted by ignoring the signal for a fixed period of time after the start of excitation or commutation.

Exciting the winding may comprise sensing the signal, exciting the winding in a first direction in response to a logically high signal, and exciting the winding in a second direction in response to a logically low signal. When the rotor is in an unaligned position, exciting the winding in the first direction when the signal is logically high and exciting the winding in the second direction when the signal is logically low generates positive excitation torque. By initially sensing the HALL signal and then exciting the winding in a direction that generally generates positive torque, the rotor will, on most occasions, be immediately driven forwards.

If no edge of the signal is sensed during the first period and two edges of the signal fail to be sensed during the second period, then this suggests that the rotor is not rotating forwards. Accordingly, the method may comprise generating a fault in the event that two edges of the signal are not sensed during the second period.

Once the rotor is rotating forwards (i.e. after an edge of the signal is sensed during the first period or two edges are sensed during the second period), the method may comprise subsequently sensing the signal and commutating the winding in response to each edge of the signal. For example, the winding may be commutated in synchrony with each edge of the signal. Alternatively, commutation of the winding may be advanced or retarded relative to each edge of the signal.

The rotor may comprise a permanent magnet and the rotor-position sensor may be a Hall-effect sensor. The Hall-effect sensor is then sensitive to the magnetic field of the permanent magnet. The permanent magnet may form part of the rotor core, i.e. that part of the rotor which interacts with the magnetic flux of the stator. Alternatively, the permanent magnet may be separate to the rotor core and is provided only as a means for indicating the position of the rotor. Where the permanent magnet forms part of the rotor core, the provision of a Hall-effect sensor provides a cost-effective means for sensing the position of a the rotor.

The present invention also provides a control system performing a method as described in any one of the preceding paragraphs.

The present invention further provides a motor assembly comprising a brushless motor and a control system as described in the preceding paragraph, wherein the brushless motor comprises a permanent-magnet rotor, a stator having a single-phase winding, and a Hall-effect sensor.

In order that the present invention may be more readily understood, an embodiment of the invention will now be described, by way of example, with reference to the accompanying drawings, in which:
Figure 1 is a sectional view of a brushless motor;
Figure 2 is a sectional view of the same brushless motor but with the Hall-effect sensor shifted to the right;
Figure 3 illustrates a motor assembly in accordance with the present invention;
Figure 4 illustrates the waveforms of the cogging torque, the back EMF and the HALL signal of the motor assembly over one mechanical cycle;
Figure 5 illustrates two parking positions of the rotor of the motor assembly; and
Figure 6 is a flow diagram of a method implemented by the motor assembly for starting the motor.

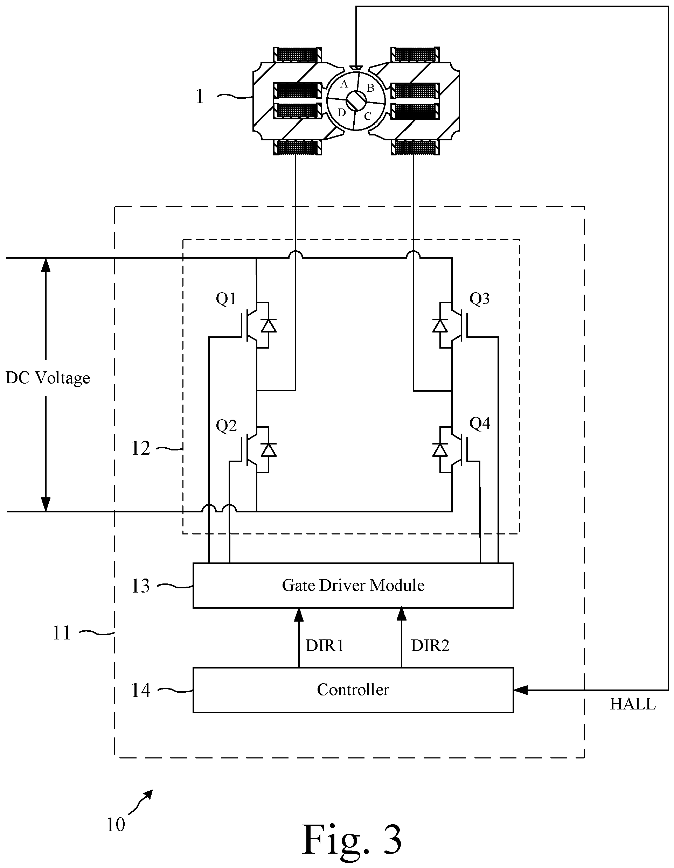

The motor assembly 10 of Figure 3 comprises a brushless motor 1 and a control system 11.

The motor 1 is identical to that illustrated in Figure 1 and comprises a permanent-magnet rotor 2, a stator 3 having a phase winding 4, and a Hall-effect sensor 5.

The rotor 2 has four magnetic poles, labelled A to D, and the stator 3 has four salient poles 6 arranged about the rotor 3.

The Hall-effect sensor 5 is located in a slot opening of the stator 3 and is sensitive to the magnet field of the rotor 2. The Hall-effect sensor 5 outputs a digital signal, HALL, that is logically high or low depending on the direction of magnetic flux through the sensor 5. Each edge of the HALL signal therefore represents a change in the polarity of the rotor 2.

The control system 11 is responsible for driving the motor 1 and comprises an inverter 12, a gate driver module 13, and a controller 14.

The inverter 12 comprises a full bridge of four power switches Q1-Q4 that couple the winding 4 to a DC voltage.

The gate driver module 13 drives the opening and closing of the switches Q1-Q4 in response to control signals from the controller 14.

The controller 14 outputs two control signals, DIR1 and DIR2, to the gate driver module 13. DIR1 and DIR2 control the direction of current through the inverter 12 and thus through the winding 4. When DIR1 is pulled logically high and DIR2 is pulled logically low, the gate driver module 13 closes switches Q1 and Q4, and opens switches Q2 and Q3, thus causing current to be driven through the winding 4 from left to right. Conversely, when DIR2 is pulled logically high and DIR1 is pulled logically low, the gate driver module 13 closes switches Q2 and Q3, and opens switches Q1 and Q4, thus causing current to be driven through the winding 4 from right to left. Current in the winding 4 is therefore commutated by reversing DIR1 and DIR2. If both DIR1 and DIR2 are pulled logically low, the gate drive module 13 opens all switches Q1-Q4. Hereafter, the terms 'set' and 'clear' will be used to indicate that a signal has been pulled logically high and low respectively.

The motor 1 is unidirectional and is intended to be driven in a forward direction only. In the particular example illustrated in Figure 1, the motor 1 is intended to be driven in a clockwise direction.

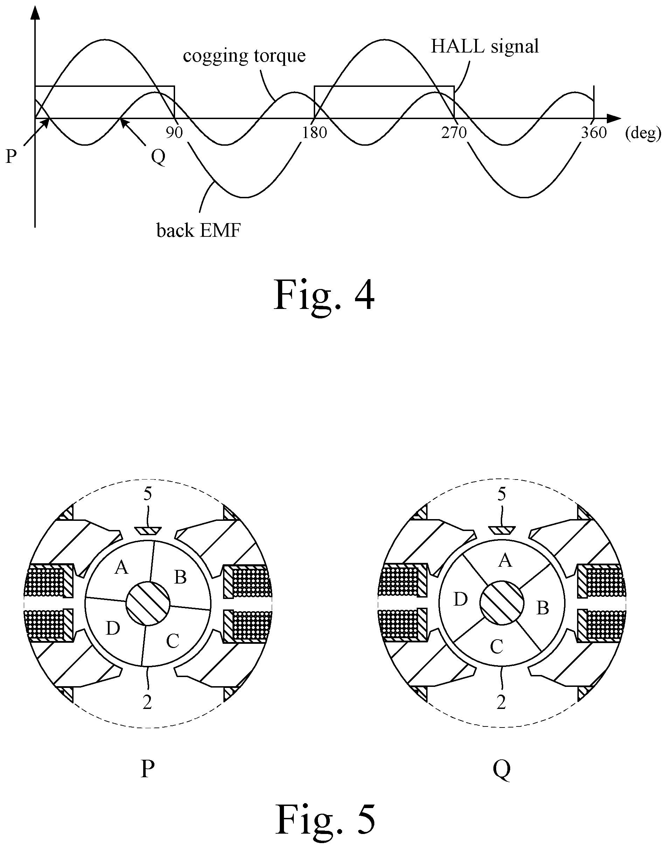

The air gap between the stator poles 6 and the rotor 2 is asymmetric. As a result, the zero-crossings in cogging torque are offset relative to the zero-crossings in back EMF. Consequently, when the rotor 2 is stationary, the rotor 2 parks in a position for which the excitation torque is non-zero and thus the rotor 2 can be started. Figure 4 illustrates the waveforms of the cogging torque, the back EMF and the HALL signal over one mechanical revolution of the rotor 2.

Figure 5 illustrates two possible parking positions of the rotor 2. Each parking position corresponds to a zero-crossing in the cogging torque, labelled P and Q in Figure 4. Parking position P is generally referred to as a stable parking position, whilst parking position Q is referred to as an unstable parking position. Although parking position Q is unstable, the rotor 2 may nevertheless park at this position due to, for example, rotor friction. The Hall-effect sensor 5 is positioned within the slot opening such that, when the rotor 2 is parked in either position, the Hall-effect sensor 5 ideally senses the polarity of rotor pole A. However, owing to a tolerance in the position of the Hall-effect sensor 5, the sensor 5 may instead sense the polarity of rotor pole B when parked in position P.

The controller 14 is responsible for starting and subsequently driving the motor 1.

Conventionally, the controller 14 might attempt to start the motor 1 in the following manner. First, the controller 14 senses the HALL signal. Irrespective of whether the rotor 2 is parked in position P or Q, the controller 14 assumes that that Hall-effect sensor 5 senses the polarity of rotor pole A. Accordingly, on the basis of the HALL signal, the controller 14 excites the winding 4 in a direction that is intended to generate positive excitation torque. When the rotor 2 is parked in position Q, the Hall-effect sensor 5 senses the polarity of rotor pole A irrespective of the tolerance in the position of the Hall-effect sensor 5. Accordingly, when the rotor 2 is parked in position Q, the polarity of the excitation torque is positive and the rotor 2 is driven forwards. In contrast, when the rotor 2 is parked in position P, the Hall-effect sensor 5 may sense the polarity of rotor pole A or rotor pole B. If the Hall-effect sensor 5 senses the polarity of rotor pole A, the polarity of the excitation torque is positive and the rotor 2 is driven forwards. If, on the other hand, the Hall-effect sensor 5 senses the polarity of rotor pole B, the polarity of the excitation torque is negative and the rotor 2 is instead driven backwards.

If the rotor 2 is driven backwards, the rotor 2 will stop at an aligned position at which the excitation torque balances the cogging torque, i.e. the magnitude of the excitation torque is equal and opposite to that of the cogging torque. Since the rotor 2 is then no longer moving, the Hall-effect sensor 5 will fail to sense any further changes in the polarity of the rotor 2 and thus the controller 14 will assume that a fault has occurred.

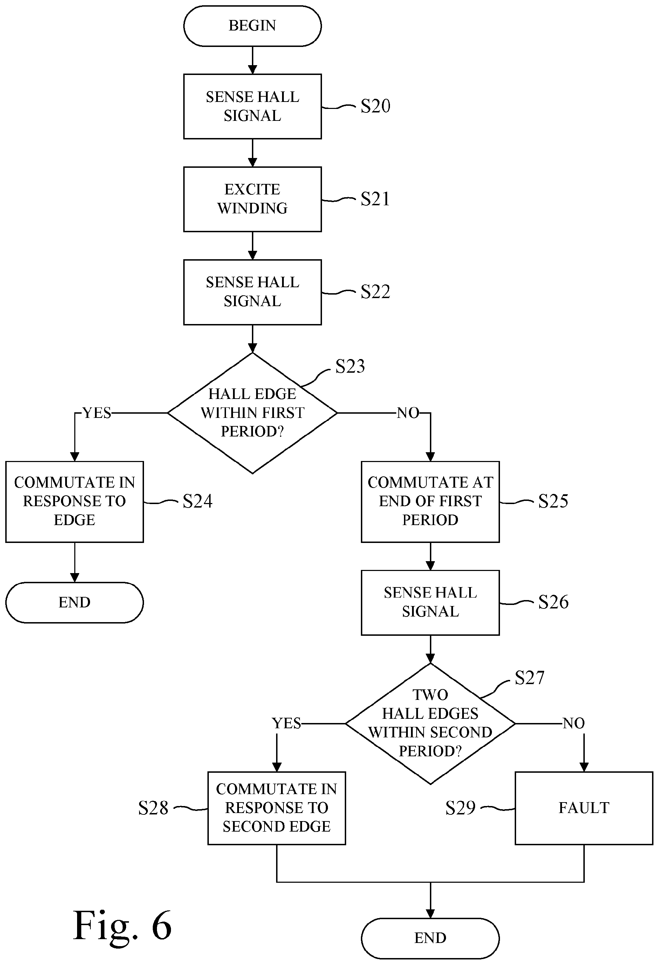

A method of starting the motor 1 that avoids this problem will now be described with reference to Figure 6.

The controller 14 first senses the HALL signal S20. On the basis of the HALL signal, the controller 14 excites the winding 4 in a manner that is intended to generate positive excitation torque S21. So, for example, when the HALL signal is logically high, the winding 4 might be excited from left to right, and when the HALL signal is logically low, the winding 4 might be excited from right to left.

The controller 14 continues to sense the HALL signal during excitation S22. If an edge of the HALL signal is sensed within a first predetermined period S23, the controller 14 commutates the winding 4 in response to the edge S24. The first predetermined period begins at the start of excitation and ends after a time sufficient for the rotor 2 to rotate from stationary through an angle of at least 90 mechanical degrees when the excitation torque is positive. By rotating through at least 90 mechanical degrees, the Hall-effect sensor 5 will sense a transition in the polarity of the rotor 2 when rotating forwards. Consequently, if the controller 14 senses an edge of the HALL signal during the first predetermined period S23, the rotor 2 is assumed to be rotating forwards. The controller 14 therefore commutates the winding 4 in response to the edge of the HALL signal S24 so as to maintain positive excitation torque and thus maintain forward drive of the rotor 2.

If no edge of the HALL signal is sensed within the first predetermined period S23, the controller 14 performs the following series of steps. First, the controller 14 commutates the winding 4 at the end of the first predetermined period S25. The controller 14 then senses the HALL signal S26. In response to a first edge of the HALL signal, the controller 14 continues to excite the winding 4 in the same direction, i.e. there is no commutation. In response to a second edge of the HALL signal, the controller 14 commutates the winding S28. If the controller 14 fails to sense two edges of the HALL signal within a second predetermined period S27, the controller 14 generates a fault S29 and opens all power switches Q1-Q4.

If no edge of the HALL signal is sensed within the first predetermined period S23, it is assumed that the initial excitation generated negative torque and that the rotor 2 has rotated backwards and stopped at the aligned position, i.e. the position at which excitation torque and cogging torque are balanced. The controller 14 therefore commutates the winding 4 at the end of the first predetermined period S25 in order to generate positive excitation torque and thus drive the rotor 2 forward. Negative excitation is assumed to occur only when the rotor 2 is parked in position P and the Hall-effect sensor 5 senses rotor pole B. Accordingly, when the rotor 2 is driven forwards from the aligned position, the Hall-effect sensor 5 will first sense the transition between rotor poles B and A. If the controller 14 were to commutate the winding 4 in response to this first edge of the HALL signal, the resulting excitation torque would be negative and the rotor 2 would be driven back to the aligned position. The controller 14 therefore continues to excite the winding 4 in the same direction in response to the first edge of the HALL signal. After the rotor 2 rotates through a further 90 mechanical degrees, the Hall-effect sensor 5 will sense the transition between rotor poles A and D. In response to this second edge of the HALL signal, the controller 14 commutates the winding S28 so as to maintain positive excitation torque and thus maintain forward drive of the rotor 2.

The second predetermined period begins at the point of commutation and ends after a time sufficient for the rotor 2 to rotate from stationary (e.g. when at the aligned position) through an angle of 180 mechanical degrees when the excitation torque is positive. Consequently, if the rotor 2 is driven forwards from the aligned position, two edges of the HALL signal should be sensed within the second predetermined period.

When the rotor 2 is parked in the aligned position, the mechanical angle separating the transition between rotor poles A and B and the Hall-effect sensor 5 is typically small. For the motor 1 illustrated in Figure 1, the angle is approximately four mechanical degrees. Accordingly, even when the tolerance in the position of the Hall-effect sensor 5 is taken into account, the first edge of the HALL signal will be sensed after a relatively small mechanical angle, certainly less than 90 mechanical degrees. Accordingly, the second predetermined period may end at an earlier time than that described above. Nevertheless, in order that two edges of the HALL signal are sensed, the second predetermined period must end after a time sufficient for the rotor 2 to rotate from stationary through an angle greater than 90 mechanical degrees.

The time required for the rotor 2 to rotate from stationary through an angle of 90 mechanical degrees will ultimately depend on the design of the motor 1, e.g. the diameter of the rotor 2, the flux-linkage characteristics of the motor 1, the magnitude of the DC voltage, etc. The time will also depend to some degree on the tolerances within the motor 1, e.g. the position of the Hall-effect sensor 5, the balance in the magnetisations of the rotor poles, etc. Accordingly, the lengths of the first and second predetermined periods will depend on the design and tolerances of the motor 1.

The operation of the method in starting the motor 1 from positions P and Q will now be described in more detail. For the purposes of the present description, it will be assumed that the HALL signal is logically high when the Hall-effect sensor 5 senses rotor poles A and C, and that the HALL signal is logically low when the Hall-effect sensor 5 senses rotor poles B and D. Moreover, it will be assumed that positive excitation torque is generally generated when the winding 4 is excited from left to right and the HALL signal is logically high, or when the winding 4 is excited from right to left and the HALL signal is logically low.

When the rotor 2 is parked in position Q, the Hall-effect sensor 5 senses rotor pole A and thus the HALL signal is logically high. In response to a logically high HALL signal, the controller 14 sets DIR1 and clears DIR2 so as to excite the winding 4 from left to right. The resulting excitation generates positive torque, which drives the rotor 2 forward (i.e. clockwise). After rotating through about 45 mechanical degrees, the transition between rotor poles A and D sweeps past the Hall-effect sensor 5. The resulting edge of the HALL signal occurs within the first predetermined period. Consequently, in response to the edge, the controller 14 commutates the winding 4 by clearing DIR1 and setting DIR2 so as to excite the winding 4 from right to left. By commutating the winding 4 in response to the edge of the HALL signal, positive excitation torque is maintained and thus the rotor 2 continues to be driven forwards.

When the rotor 2 is parked in position P, the Hall-effect sensor 5 senses either rotor pole A or rotor pole B. First, let us consider the situation in which the Hall-effect sensor 5 senses rotor pole A. In response to the logically high HALL signal, the controller 14 sets DIR1 and clears DIR2 so as to excite the winding 4 from left to right. The resulting excitation generates positive torque, which drives the rotor 2 forward (i.e. clockwise). After rotating through less than 90 mechanical degrees, the transition between rotor poles A and D sweeps past the Hall-effect sensor 5. It naturally follows that, since each rotor pole spans 90 mechanical degrees, the transition between rotor poles A and D will occur within 90 mechanical degrees. The resulting edge of the HALL signal therefore occurs within the first predetermined period. In response to the edge of the HALL signal, the controller 14 commutates the winding 4 by clearing DIR1 and setting DIR2 so as to excite the winding 4 from right to left. Positive excitation torque is therefore maintained and the rotor 2 continues to be driven forwards.

Let us now consider the situation in which the Hall-effect sensor 5 senses rotor pole B. In response to the now logically low HALL signal, the controller 14 clears DIR1 and sets DIR2 so as to excite the winding 4 from right to left. The resulting excitation generates negative torque, which drives the rotor 2 backward (i.e. counter clockwise). The rotor 2 stops at the aligned position at which the negative excitation torque is balanced by the positive cogging torque. No edge of the HALL signal is therefore sensed during the first predetermined period. Consequently, at the end of the first predetermined period, the controller 14 commutates the winding 4 by setting DIR1 and clearing DIR2 so as to excite the winding 4 from left to right. The resulting positive excitation torque drives the rotor forward (i.e. clockwise). After rotating through a relatively small mechanical angle, the transition between rotor poles B and A sweeps past the Hall-effect sensor 5. The controller 14 ignores the resulting edge of the HALL signal and continues to excite the winding 4 in the same direction, i.e. from left to right. As a result, positive excitation torque is maintained and thus the rotor 2 continues to be driven forwards. After the rotor rotates through a further 90 mechanical degrees, the transition between rotor poles A and D sweeps past the Hall-effect sensor 5. In response to this second edge of the HALL signal, the controller 14 commutates the winding 4 by clearing DIR1 and setting DIR2 so as to excite the winding from right to left. By commutating the winding 4 in response to the second edge of the HALL signal, positive excitation torque is maintained and thus the rotor 2 continues to be driven forward.

The controller 14 is therefore able to start the motor 1 irrespective of the parking position of the rotor 2 and irrespective of the tolerance in the position of the Hall-effect sensor 5.

Once the motor 1 has been started and the rotor 2 is correctly rotating forwards, the controller 14 may employ conventional methods for accelerating or otherwise driving the motor 1. For example, after starting the motor 1, the controller 14 may commutate the winding 4 in synchrony with the edges of the HALL signal in order to accelerate the motor 1.

The applicant originally devised an alternative method for starting the motor 1. However, the alternative method suffered from a particular problem which meant that the motor 1 failed to start in certain circumstances. The method described above overcomes this problem and thus it is perhaps worth describing the alternative method and the problem from which it suffered.

The alternative method of starting the motor 1 proceeds as follows. First, the controller 14 senses the HALL signal. On the basis of the HALL signal, the controller 14 excites the winding 4 in a manner that is intended to generate negative excitation torque. After a predetermined period of time, the controller 14 again senses the HALL signal and excites the winding 4 in a manner that is now intended to generate positive excitation torque; this may or may not involve commutating the winding 4. The operation of this alternative method in starting the motor 1 from positions P and Q will now be examined.

When the rotor 2 is parked in position Q, the Hall-effect sensor 5 senses rotor pole A and thus the initial excitation torque is negative. The rotor 2 is therefore driven backwards and stops at the aligned position. At the end of the predetermined period, the Hall-effect sensor 5 continues to sense rotor pole A and thus the winding 5 is commutated so as to generate positive excitation torque. As a result, the rotor 2 is driven forwards.

When the rotor 2 is parked in position P and the Hall-effect sensor 5 senses rotor pole B, the initial excitation torque is positive rather than negative. Consequently, the rotor 2 is driven forwards. During the predetermined period, the transition between rotor poles B and A passes the Hall-effect sensor 5. Accordingly at the end of the predetermined period, the Hall-effect sensor 5 senses rotor pole A. The controller 14 therefore continues to excite the winding 4 in the same direction so as generate positive excitation torque, and the rotor 2 continues to be driven forwards.

When the rotor is parked in position P and the Hall-effect sensor senses rotor pole A, a potential problem arises. The initial excitation torque is negative and the rotor 2 is therefore driven backwards and stops at the aligned position. At the end of the predetermined period, the controller 14 again senses the HALL signal. Unfortunately, owing to the tolerance in the position of the Hall-effect sensor 5, the senor 5 may sense rotor pole A or rotor pole B when the rotor 2 is stopped at the aligned position. If the Hall-effect sensor 5 senses rotor pole A, the controller 14 commutates the winding 4, which generates positive excitation torque and thus drives the rotor 2 forward. However, if the Hall-effect sensor 5 senses rotor pole B, the controller 14 continues to excite the winding 4 in the same direction and thus the rotor 2 fails to move from the aligned position.

The method of the present invention overcomes this problem and can successfully start the motor 1 irrespective of the parking position of the rotor 2 and irrespective of any tolerance in the position of the Hall-effect sensor 5.

In addition to the magnetic field of the rotor 2, the Hall-effect sensor 5 may be sensitive to the magnetic field generated by the stator 3 when the winding 4 is excited. Ideally, the Hall-effect sensor 5 is oriented parallel to the magnet field lines of the stator 3 such that the Hall-effect sensor 5 is generally insensitive to the stator field. However, owing to the tolerance in the position and orientation of the Hall-effect sensor 5, the sensor 5 may be sensitive to the magnetic field of the stator 3. As a result, the HALL signal may change when the winding 4 is excited or commutated. The controller 14 would then incorrectly interpret the change in the HALL signal as a transition in the polarity of the rotor 2 and thus the motor 1 may fail to start.

Owing to the orientation of the Hall-effect sensor 5, the sensor 5 is much more sensitive to the magnetic field of the rotor 2. Accordingly, the magnetic field of the stator 3 is likely to influence the HALL signal only when the rotor field is relatively weak, i.e. at the transitions between rotor poles. So, for example, when the rotor 2 is parked in position P, the initial excitation of the winding 4 may cause the HALL signal to change. Equally, when the rotor 2 is in the aligned position, commutation of the winding 4 may cause the HALL signal to change. In both instances, the controller 14 would incorrectly interpret the change in HALL signal as a transition in the polarity of the rotor 2. In order to prevent this from occurring, the controller 14 ignores any edges of the HALL signal that occur shortly after excitation or commutation of the winding 4, as will now be described.

When the rotor 2 is parked in position P, the Hall-effect sensor 5 senses rotor pole A or rotor pole B. It does not matter which of the rotor poles the Hall-effect sensor 5 senses since the behaviour described below is the same for both rotor poles. So for the purposes of the present description, let us assume that the Hall-effect sensor 5 senses rotor pole A. The HALL signal is therefore initially logically high. The controller 14 then excites the winding 4 so as to drive the rotor 2 forward. The rotor field passing through the Hall-effect sensor 5 is relatively weak and thus the resulting stator field may cause the HALL signal to change from logically high to logically low. This change in HALL signal is ignored by the controller 14 and thus the rotor 2 is driven forwards by the positive excitation torque. As the rotor rotates, the strength of the rotor field passing through the Hall-effect sensor 5 increases. After a relatively short period of time, the rotor field passing through the Hall-effect sensor 5 exceeds that of the stator field. As a result, the HALL signal again changes, this time from logically low to logically high. The controller 14 again ignores this change in the HALL signal. Accordingly, after a relatively short period of time the HALL signal is returned to its original value. By ignoring the HALL signal for a short period of time following excitation, any adverse effects that the stator field might have on the HALL are averted. The controller 14 therefore employs a first predetermined period that begins a set period of time after the start of excitation.

The same behaviour (i.e. two edges of the HALL signal is short succession) may be observed shortly after commutating the winding 4 when the rotor 2 is stopped in the aligned position. The controller 14 therefore ignores any edges of the HALL signal that occur within a short period of time following commutation. Accordingly, the second predetermined period no longer begins at the point of commutation but instead begins a set period of time after commutation.

The set period of time at which the first and second predetermined period begin will ultimately depend on the design of the motor, e.g. the tolerance in the position and orientation of the Hall-effect sensor 5, the magnetic field strength of the rotor 2, the magnetic field strength of the stator 3 during excitation, the angular speed at which the rotor 2 rotates during excitation, etc.

After the motor 1 has started rotating, the stator field may continue to influence the HALL signal at transitions in the rotor poles. The net effect of this influence is that each edge of the HALL signal is shifted slightly relative to the zero-crossings in back EMF. Accordingly, the effect is similar to that which arises due to the tolerance in the position of the Hall-effect sensor 5.

The method described above and illustrated in Figure 6 begins by sensing the HALL signal. On the basis of the HALL signal, the winding 4 is excited in a direction that is intended to generate positive excitation torque. However, this initial step of sensing the HALL signal may be omitted and the method may begin simply by exciting the winding 4 in a particular direction. That being said, the Hall-effect sensor 5 consistently senses rotor pole A when the rotor 2 is parked in position Q and, for most motors, the Hall-effect sensor 5 will sense rotor pole A when the rotor 2 is parked in position P. Accordingly, by sensing the HALL signal and then exciting the winding 4 in a direction that is intended to generate positive torque, the rotor 2 will, on most occasions, be immediately driven forwards.

Excessive phase current may damage the power switches Q1-Q4 or demagnetise the rotor 2. Accordingly, the control system 11 may employ a current-control scheme that limits the magnitude of phase current in the winding 4. Accordingly, where reference is made to exciting the winding 4, it should be understood that the DC voltage used to excite the winding 4 may be chopped.

In the embodiment described above, the position of the rotor 2 is sensed using a Hall-effect sensor 5. However, other types of sensor might equally be used to sense the position of the rotor 2. For example, the sensor might take the form of an optical encoder that comprises an encoder disc mounted to the rotor 2 and an optical sensor. The encoder disc may comprise four segments, each corresponding to a pole of the rotor 2. The optical sensor then outputs a digital signal that changes with each segment of the encoder disc.

Since a sensor other than a Hall-effect sensor may be used to sense the position of the rotor 2, it follows that the rotor 2 need not comprise a permanent magnet. Accordingly, the motor may be a reluctance motor having a non-permanent magnet rotor.

Reference has thus far been made to a brushless motor 1 having a single phase winding 4, four rotor poles A-D, and four stator poles 6. However, the method described above might equally be used to start a motor having a plurality of phase windings and/or a fewer or greater number of rotor and stator poles.

Where the motor comprises a plurality of phase windings, it will be appreciated that not all of the phase windings are excited at any one time. Accordingly, where reference is made to exciting a winding, it should be understood that only those phase windings are excited that generate positive or negative torque. Similarly, where reference is made to commutating a winding, it should be understood that excitation of the phase windings switches in a manner that is intended to either maintain positive torque if the rotor is rotating forwards or reverse the polarity of torque if the rotor has stopped at an aligned position.

The first predetermined period has been described as ending at a time sufficient for the rotor 2 to rotate from stationary through an angle of at least 90 mechanical degrees when the excitation torque is positive. This period is appropriate for a four-pole rotor 2 in which each rotor pole spans 90 mechanical degrees. For a motor having an alternative number of rotor poles, the first predetermined period ends at a time sufficient for the rotor to rotate from stationary through an angle of at least 360/N mechanical degrees, where N is the number of rotor poles. Likewise, the second predetermined period ends at a time sufficient for the rotor to rotate from stationary through an angle greater than 360/N mechanical degrees.

## Claims

1. A method of starting a brushless motor (1), the motor (1) comprising a rotor (2), a stator (3) having at least one phase winding (4), and a rotor-position sensor (5), the method comprising:
exciting the winding (4);
sensing a signal output by the rotor-position sensor (5);
if an edge of the signal is sensed during a first period:
commutating the winding (4) in response to the edge;
otherwise:
commutating the winding (4) at the end of the first period;
sensing the signal; and
commutating the winding (4) in response to a second of two edges of the signal sensed during a second period.

2. A method as claimed in claim 1, wherein the rotor (2) has N poles and the first period ends at a time sufficient for the rotor (2) to rotate from stationary through an angle of at least 360/N mechanical degrees when exciting the winding (4) generates positive excitation torque.

3. A method as claimed in claim 1 or 2, wherein the rotor (2) has N poles and the second period ends at a time sufficient for the rotor (2) to rotate from stationary through an angle greater than 360/N mechanical degrees after commutating the winding (4) at the end of the first period.

4. A method as claimed in any one of the preceding claims, wherein the first period begins a fixed period of time after the start of excitation.

5. A method as claimed in any one of the preceding claims, wherein the second period begins a fixed period of time after commutation.

6. A method as claimed in any one of the preceding claims, wherein exciting the winding (4) comprises sensing the signal, exciting the winding (4) in a first direction in response to a logically high signal, and exciting the winding (4) in a second direction in response to a logically low signal, wherein exciting the winding (4) in the first direction when the signal is logically high and exciting the winding (4) in the second direction when the signal is logically low generates positive excitation torque when the rotor (2) is in an unaligned position.

7. A method as claimed in any one of the preceding claims, wherein the method comprises generating a fault in the event that two edges of the signal are not sensed during the second period.

8. A method as claimed in any one of the preceding claims, wherein the method comprises subsequently sensing the signal and commutating the winding (4) in response to each edge of the signal.

9. A method as claimed in any one of the preceding claims, wherein the rotor (2) comprises a permanent-magnet and the rotor-position sensor is a Hall-effect sensor (5).

10. A control system (11) for a brushless motor (1), the control system performing a method as claimed in any one of the preceding claims.

11. A motor assembly (10) comprising a brushless motor (1) and a control system (11) as claimed in claim 10, the brushless motor (1) comprising a permanent-magnet rotor (2), a stator having a single phase winding (4), and a Hall-effect sensor (5).

## Patentansprüche

1. Verfahren zum Starten eines bürstenlosen Motors (1), der Motor (1) umfassend einen Rotor (2), einen Stator (3) mit zumindest einer Phasenwicklung (4) und einen Rotorpositionssensor (5), wobei das Verfahren Folgendes umfasst:
Erregen der Wicklung (4);
Erfassen eines Signalausgangs durch den Rotorpositionssensor (5);
wenn eine Flanke des Signals während eines ersten Zeitraums erfasst wird:
Kommutieren der Wicklung (4) in Reaktion auf die Flanke;
andernfalls:
Kommutieren der Wicklung (4) am Ende des ersten Zeitraums; Erfassen des Signals; und
Kommutieren der Wicklung (4) in Reaktion auf eine zweite von zwei Flanken des während eines zweiten Zeitraums erfassten Signals.

2. Verfahren nach Anspruch 1, wobei der Rotor (2) N Pole hat und wobei der erste Zeitraum zu einem Zeitpunkt endet, der für den Rotor (2) ausreicht, um von einem stationären Zustand durch einen Winkel von mindestens 360/N mechanischen Graden zu rotieren, wenn Erregen der Wicklung (4) ein positives Erregungsdrehmoment erzeugt.

3. Verfahren nach Anspruch 1 oder 2, wobei der Rotor (2) N Pole hat und wobei der zweite Zeitraum zu einem Zeitpunkt endet, der für den Rotor (2) ausreicht, um von einem stationären Zustand nach dem Kommutieren der Wicklung (4) am Ende des ersten Zeitraums durch einen Winkel größer als 360/N mechanische Grade zu rotieren.

4. Verfahren nach einem der vorhergehenden Ansprüche, wobei der erste Zeitraum zu einer festen Zeitspanne nach dem Start der Erregung beginnt.

5. Verfahren nach einem der vorhergehenden Ansprüche, wobei der zweite Zeitraum zu einer festen Zeitspanne nach der Kommutierung beginnt.

6. Verfahren nach einem der vorhergehenden Ansprüche, wobei Erregen der Wicklung (4) Erfassen des Signals, Erregen der Wicklung (4) in eine erste Richtung in Reaktion auf ein lokal hohes Signal und Erregen der Wicklung (4) in eine zweite Richtung in Reaktion auf ein lokal tiefes Signal umfasst, wobei Erregen der Wicklung (4) in die erste Richtung, wenn das Signal logisch hoch ist, und Erregen der Wicklung (4) in die zweite Richtung, wenn das Signal logisch tief ist, ein positives Erregungsdrehmoment erzeugt, wenn sich der Rotor (2) in einer nichtausgerichteten Position befindet.

7. Verfahren nach einem der vorhergehenden Ansprüche, wobei das Verfahren Erzeugen eines Fehlers in dem Fall umfasst, dass zwei Flanken des Signals während des zweiten Zeitraums nicht erfasst werden.

8. Verfahren nach einem der vorhergehenden Ansprüche, wobei das Verfahren nachfolgendes Erfassen des Signals und Kommutieren der Wicklung (4) in Reaktion auf jede Flanke des Signals umfasst.

9. Verfahren nach einem der vorhergehenden Ansprüche, wobei der Rotor (2) einen Permanentmagneten umfasst und der Rotorpositionssensor ein Hall-Effekt-Sensor (5) ist .

10. Steuersystem (11) für einen bürstenlosen Motor (1), wobei das Steuersystem ein Verfahren nach einem der vorhergehenden Ansprüche durchführt.

11. Motoranordnung (10), umfassend einen bürstenlosen Motor (1) und ein Steuersystem (11) nach Anspruch 10, wobei der bürstenlose Motor (1) einen Permanentmagnetrotor (2), einen Stator mit einer einphasigen Wicklung (4) und einen Hall-Effekt-Sensor (5) umfasst.

## Revendications

1. Procédé de démarrage d'un moteur sans balai (1), le moteur (1) comprenant un rotor (2), un stator (3) ayant au moins un enroulement de phase (4), et un détecteur de position de rotor (5), le procédé comprenant les opérations consistant à :
exciter l'enroulement (4) ;
détecter un signal produit par le détecteur de position de rotor (5) ;
si un bord du signal est détecté durant une première période :
commuter l'enroulement (4) en réaction au bord ;
sinon :
commuter l'enroulement (4) à la fin de la première période ;
détecter le signal ; et
commuter l'enroulement (4) en réaction à un deuxième bord parmi deux bords du signal détecté durant une deuxième période.

2. Procédé tel que revendiqué dans la revendication 1, dans lequel le rotor (2) a N pôles et la première période se termine à un moment suffisant pour permettre au rotor (2) de tourner à partir de l'état stationnaire sur un angle d'au moins 360/N degrés mécaniques lorsque l'excitation de l'enroulement (4) génère un couple d'excitation positif.

3. Procédé tel que revendiqué dans la revendication 1 ou 2, dans lequel le rotor (2) a N pôles et la deuxième période se termine à un moment suffisant pour permettre au rotor (2) de tourner à partir de l'état stationnaire sur un angle plus grand que 360/N degrés mécaniques après la commutation de l'enroulement (4) à la fin de la première période.

4. Procédé tel que revendiqué dans l'une quelconque des revendications précédentes, dans lequel la première période commence un intervalle de temps fixe après le démarrage de l'excitation.

5. Procédé tel que revendiqué dans l'une quelconque des revendications précédentes, dans lequel la deuxième période commence un intervalle de temps fixe après la commutation.

6. Procédé tel que revendiqué dans l'une quelconque des revendications précédentes, dans lequel l'excitation de l'enroulement (4) comprend les opérations consistant à détecter le signal, exciter l'enroulement (4) dans un premier sens en réaction à un signal logiquement élevé, et exciter l'enroulement (4) dans un deuxième sens en réaction à un signal logiquement faible, dans lequel l'excitation de l'enroulement (4) dans le premier sens lorsque le signal est logiquement élevé et l'excitation de l'enroulement (4) dans le deuxième sens lorsque le signal est logiquement faible génère un couple d'excitation positif lorsque le rotor (2) se trouve dans une position non alignée.

7. Procédé tel que revendiqué dans l'une quelconque des revendications précédentes, dans lequel le procédé comprend la génération d'un défaut dans l'éventualité où deux bords du signal ne sont pas détectés durant la deuxième période.

8. Procédé tel que revendiqué dans l'une quelconque des revendications précédentes, dans lequel le procédé comprend ultérieurement la détection du signal et la commutation de l'enroulement (4) en réaction à chaque bord du signal.

9. Procédé tel que revendiqué dans l'une quelconque des revendications précédentes, dans lequel le rotor (2) comprend un aimant permanent et le détecteur de position de rotor est un détecteur d'effet Hall (5).

10. Système de commande (11) pour un moteur sans balai (1), le système de commande réalisant un procédé tel que revendiqué dans l'une quelconque des revendications précédentes.

11. Ensemble moteur (10) comprenant un moteur sans balai (1) et un système de commande (11) tel que revendiqué dans la revendication 10, le moteur sans balai (1) comprenant un rotor à aimant permanent (2), un stator ayant un enroulement monophasé (4), et un détecteur d'effet Hall (5).
